# EUROPEAN PATENT APPLICATION

(11) **EP 2 181 830 A1**
(43) Date of publication of application: **05.05.2010**
(21) Application number: 08425700.5
(22) Date of filing: 31.10.2008
(51) Int. Cl.: B29C 45/16, B29C 45/14, A47B 77/02, A47B 95/04, D06F 39/12

(54) **Manufacturing process of a worktop, particularly for household appliances, and worktop so manufactured**

(71) Applicant: GRUSAN S.r.l., 33080 Porcia PN (IT)
(72) Inventor: Sandrin, Giannino, 33080 Porcia Pordenone (IT)
(74) Representative: Petruccelli, Davide

(57) **Abstract**

The present Invention refers to a manufacturing method of a worktop (1), in particular a worktop for electric household appliances, and a worktop obtained therewith.

A manufacturing method of a worktop (1) according to the present invention is characterized by comprising the following steps:
a. arranging a panel (2) inside a mould;
b. within said mould, forming a plurality of first members (4) along a peripheral border (3) of said panel (2), said first members (4) covering a first portion of said border (3) and being arranged so that between two neighbouring ones of said first members (4) there is interposed a second portion of said border (3);
c. within said mould, forming second members (5) so as to cover said second portion of border (3).
A worktop (1) is also claimed.

## Description

The present invention refers to a manufacturing method of a worktop, in particular a worktop for electric home appliances, and a worktop manufactured with such method.

Worktops are commonly known to be used to form the top portion of furniture pieces, such as for example kitchen cabinets, or the top portion of the outer casing of electric household appliances, such as clothes washing machines, clothes drying machines, refrigerators, and the like, of the so-called free-standing type or the type intended for installation in a side-by-side or juxtaposed arrangement with other cabinets. A worktop of the above-noted kind is generally formed of a panel of a lignocellulosic material, such as for instance chipboard or MDF (Medium-Density-Fiberboard), and a frame of a polymeric material mounted along the peripheral border of the panel. These parts are produced separately from each other to be then joined together, for example by means of sealant-type adhesives adapted to ensure imperviousness to water and other fluids.

A first type of worktop for electric household appliances is shown, along with the related manufacturing method, in the British patent application GB 2 165 747. According to such disclosure, the frame used to surround the worktop panel is provided in the form of two distinct members having each a C-shaped configuration, wherein these members can be slidably fitted together by inserting them into each other so as to surround and hold a panel that is additionally fastened to the lower edge of each such C-shaped member by means of clips, rivets, or the like. A worktop made in accordance with the teachings of the above-cited disclosure GB 2 165 747 has however some drawbacks. A first such drawback lies in the fact that the process for assembling the worktop turns out as being particularly complex and further requires a good amount of coupling accuracy in order to prevent the contact portions of the two members forming the frame from being likely to break. Furthermore, the whole manufacturing process of the worktop turns out as being disadvantageously complicated by the considerable number of displacements and handlings that are needed within the manufacturing plant, i.e. in the factory, for the various component parts of the worktop to be moved from the production area to the assembly one.

Another drawback of a worktop of the above-described kind lies in the fact that manufacturing tolerances needed to allow the two members forming the frame of the worktop to correctly slide relative to each other in view of getting coupled together, are such as not to ensure any water-tight seal against liquid seepages. This may actually lead to an operator or user to incur even severe safety risks in the case that liquid manages to seep through the junctures of the worktop frame and reach into the electric household appliance. In view of at least partially solve this problem, various solutions have been proposed aimed at making worktops impervious to liquid seepages through the application of particular sealing substances, such as Vaseline, in and along surfaces where liquid is more likely to seep through the panel, i.e. at the sites where clips or similar fasteners are provided to fasten the panel to the worktop frame. The application of such substances, however, has the effect of making the related manufacturing process disadvantageously complicated and expensive.

A further example of embodiment of a worktop for electric household appliances is shown in the European patent application EP 0 180 223, in which said worktop is substantially comprised of a frame made in a unitary single-piece construction form by injection-moulding a thermoplastic material accordingly, and a flexible panel that can be slidably coupled to such frame. A worktop of this kind, however, is not so easily adaptable to electric household appliances having different construction, i.e. design and dimensional properties, unless substantial modifications are previously made in the mould used to form the frame of polymeric material. Moreover, the flexibility of the panel needed in view of allowing it to be assembled with the frame may be such as to detrimentally affect both the actual planarity of the panel in the framed state thereof, i.e. upon it having been set in the frame, and the ability of the worktop to bear a weight without giving in or buckling.

Yet a further problem typically encountered in manufacturing worktops of the kind described above lies in the fact that, in the angular regions of a frame made in a unitary single-piece form, they quite often tend to form cracks or similar fissures that are mainly due to shrinkage of the polymeric material immediately upon the frame having been formed by injection moulding. Further cracks may also develop in the same regions even after a long time since the frame has been moulded, owing to stresses remaining latent within the polymeric structure. This practically involves a rather considerable amount of production rejects, which should most desirably be reduced. In addition, worktops of the kind described in EP 0 180 223 require a rather articulate assembly process to be carried out, which comprises a disadvantageously elevated number of distinct assembly steps and handlings of the component parts making up the worktop.

Another drawback that is shared by prior-art worktops of the various kinds used both in the home appliance industry and in the furniture industry derives from the really considerable technical difficulty and expensiveness of any process to be carried out in view of recycling the parts making up a worktop. Usually, due to the worktop being generally comprised of a mix of polymeric materials, lignocellulosic materials, adhesives, metal, and the like, separating such materials from each other turns often out as being technically impossible or simply non-practicable at acceptable or, anyway, competitive costs as compared with the entire worktop being simply disposed of as such in a dump.

It therefore is a main object of the present invention to provide a method for manufacturing a worktop, in particular for electric home appliances, as well as a worktop manufactured by such method, which are effective in doing away with the above-cited drawbacks of prior-art manufacturing methods and worktops

Within such main object, it is a purpose of the present invention to provide a manufacturing method for a worktop, which is effective in reducing the number of steps required to manufacture said worktop as compared with prior-art methods of the same kind. In particular, it is an important purpose of the present invention to provide a worktop that is free from defects through the use of the so-called co-injection technique for moulding the various component parts thereof, or by making use of the so-called multi-injection moulding technique.

A further purpose of the present invention is to provide a manufacturing method for a worktop that is effective in cutting down the number of production rejects, while at the same time reducing the number of handlings required for the worktop itself during production and manufacturing.

Yet another purpose of the present invention is to provide a manufacturing method for a worktop that is capable of being easily and economically integrated in a more complex manufacturing process for an electric household appliance.

A further, equally important purpose of the present invention is to provide a manufacturing method for a worktop, which is versatile and easily adaptable to the production of a multiplicity of worktops having shapes, sizes and construction characteristics differing from each other.

Yet a further purpose of the present invention is to provide a worktop, in particular a worktop for electric household appliances such as clothes washing machines, clothes drying machines, refrigerators, and the like, which is free from adhesive substances without the mutual fastening of the component parts making up the worktop and the imperviousness to liquids of the surfaces interfacing said component parts being affected in any way.

Still another purpose of the present invention is to provide a worktop, in which the dimensional tolerance relating to the planarity of said worktop is reduced as compared with prior-art worktops.

A further, equally important purpose of the present invention is to provide a worktop, which is capable of being easily disassembled, either manually or with the aid of automated machines, wherein the various materials which it is made of can be separated based on the chemical nature thereof and then sent to an appropriate recycling process.

According to the present invention, all these aims are reached in a manufacturing method for a worktop, in particular a worktop for electric household appliances, incorporating the characteristics as recited in the following claim 1, and in a worktop made with said manufacturing method incorporating that characteristics as recited in the following claim 6.

Anyway, features and advantages of the present invention will be more readily understood from the description that is given below by way of non-limiting example with reference to the accompanying drawings, in which:
- Figure 1 is a schematical, perspective exploded view of a worktop according to the present invention;
- Figure 2 is an enlarged view of the detail II of Figure 1;
- Figure 3 is a plan view of a detail of a worktop embodied in accordance with the present invention;
- Figure 4 is a cross-sectional view of the worktop according to the line IV-IV of Figure 3;
- Figure 5 is an enlarged view of the detail indicated at V in Figure 4;
- Figure 6 is an enlarged view of the detail indicated at VI in Figure 4.

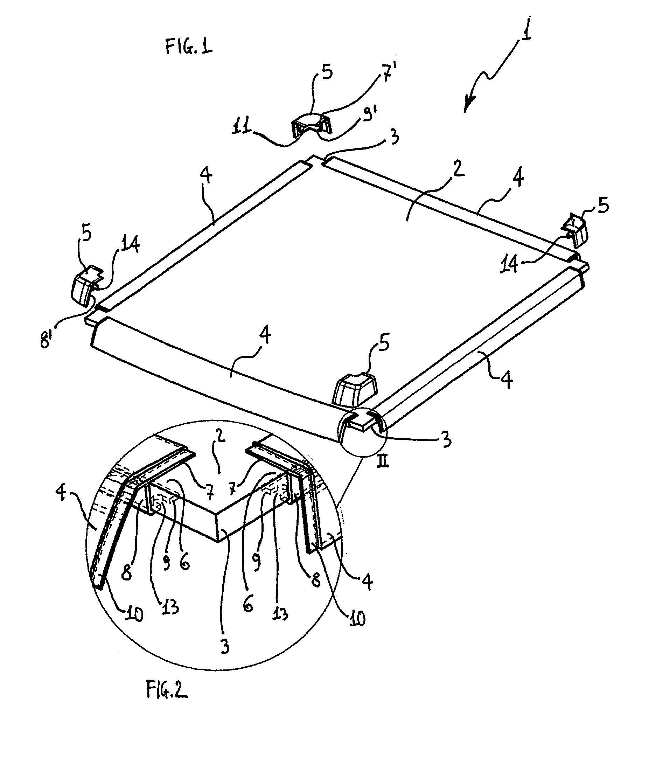

With reference to the Figures listed above, the method for manufacturing a worktop 1 made in accordance with the present invention calls for a mould of a kind as largely known as such in the art, and not shown in the Figures, to be provided, and a panel 2, i.e. a planar member, to be then arranged thereinside. Panels that may be used in the manufacturing method described hereinbelow are for instance those made of a lignocellulosic material, such as chipboard or multilayer wooden panels, MDF (Medium-Density-Fibreboard) panels, but even sheets of a polymeric material. Along the peripheral border 3 delimitating the surface of the panel 3, and within said mould, there are formed first members 4, e.g. by injection-moulding a polymeric material there. The conformation of these members 4, which shall be described in greater detail further on, is such as to be able to cover a first portion of the peripheral border 3, while leaving a second portion of the same border 3 unaffected, i.e. uncovered. In other words, between two neighbouring first members 4 there is interposed a part of said second portion of border 3 that is not covered by said same first members 4. By way of illustrative example, illustrated 8in Figure 1 is a panel 2 having a quadrangular shape, in which the members 4 formed along the peripheral border 3 of the panel are shown to extend along the sides of the same panel without reaching up to the angular regions thereof, i.e. the regions that are defined by two adjacent sides intersecting each other. According to the present invention, onto the second portion of peripheral border 3 that has been left unaffected, i.e. uncovered by the first members 4 moulded along such border, there are additionally moulded second members 5, which cause the same second portion of border 3 to become covered, too. As a result, jointly with the afore-cited first members 4, these second members 5 are effective in causing the entire peripheral border 3 to be eventually covered.

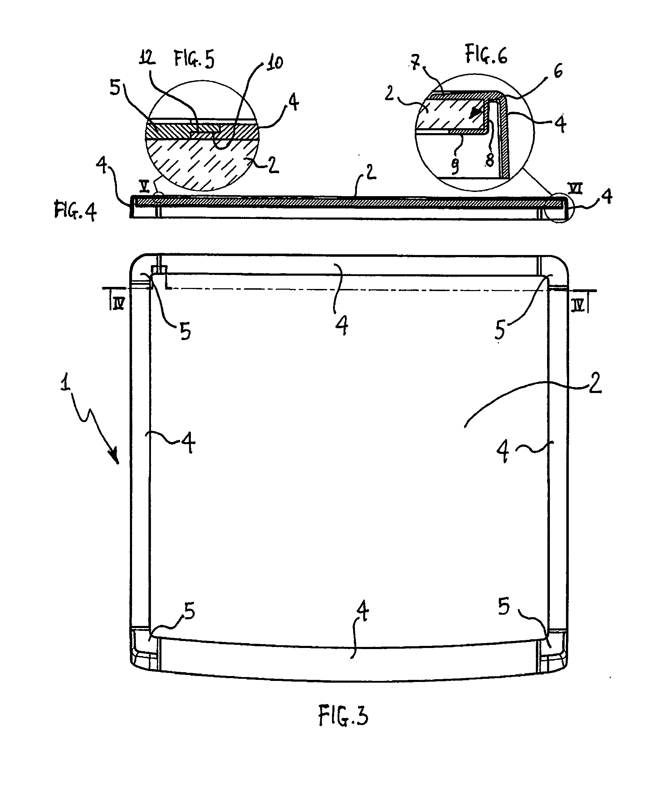

An enlarged view of an angular region of the panel 2 and the end portions of two neighbouring first members 4 is shown in Figure 2. Each one of said first members 4 comprises an accommodation 6 that develops along the full length of the member 4 and is defined by a pair of walls 7 and 9 extending parallel to and spaced from each other, starting from a third wall 8 common to both walls 7 and 9, towards the panel 2. This accommodation 6 of the member 4, which is to be seen also in the enlarged view of Figure 6, is adapted to receive a portion of the border 3 of the panel 2, thereby securing the same panel to each member 4 in a stable manner. Owing to said first members 4 being formed within a mould directly onto the border 3, the contact between the walls 7 and 9 of the accommodation 6 and the same border 3 is very tight, i.e. free from any play or looseness that might give rise to undesired displacements of the panel 2 relative to the first members 4. In all cases, the coupling between the accommodation 6 and the panel 2 does not require any bonding or gluing of the walls 7, 8 and 9 to the surfaces of the panel 2, but simply a dimensional interference, the extent of which is determined by the coefficient of shrinkage of the - preferably polymeric - material used to mould the first members 4.

With reference to Figures 2 and 5, the end portions of each one of said first members 4 comprise surfaces 10 for the attachment of one of the second members 5 that are moulded - within the mould in which the panel 2 is inserted and arranged - onto those portions of the peripheral border 3 that are not covered by the first members 4. When the second members 5 are moulded, the preferably polymeric material, which they are made of, spreads upon the surfaces 10, thereby forming second conjugate surfaces 12 that contribute to each one of said second members 5 getting firmly attached between two neighbouring first members 4. The same moulding operation creates an accommodation 11 (Figure 1) in the second members 5 having a conformation and a purpose that are substantially similar to the ones described above in connection with the accommodation 6 created in the first members 4. Therefore, such accommodation 11 will be defined by a pair of walls 7' and 9' extending parallel to and spaced from each other starting from a common third wall 8'. The coefficient of shrinkage of the preferably polymeric material used to mould the second members 5 determines a kind of interference-fit coupling between the surfaces 10 and 12 of the members 4 and 5, respectively. Owing to them overlapping - although partially- each other, the conjugate surfaces 10 and 12 determine a kind of butt-strap or joint-covering effect that complies with, i.e. compensates for the shrinkage of the material, thereby ensuring the water-tightness of the coupling. As a result, without any need arising for an adhesive substance to be used to such purpose, the mechanical joint between the first and second members 4 and 4 gives rise to a complete frame surrounding the panel 2 all along the peripheral border 3 thereof in a manner that is fully effective in firmly retaining and holding the panel 2 therewithin, as this is shown in Figures 3 and 4. In the surfaces 10, 12 interfacing the first and second members 4 and 5 with each other, and in the interfaces between the accommodations 6 and 11 of the first and second members 4, 5 and the panel 2, the mutual interference of the contact surfaces is such as to effectively prevent any liquid substance from being able to seep therethrough, thereby making the whole worktop construction practically water-tight.

In view of promoting the stability of the coupling between a second member 5 and two contiguous first members 4, on the end portions of both such members 4, 5 there can be integrally formed or, anyway, provided fit-in connection means in the form of further conjugate surfaces 13, 14, such as for instance a protrusion and a correspondingly shaped recess.

In accordance with production needs, the first and second members 4, 5 may be moulded by either using a single and same material, preferably of a polymeric type, or two polymeric materials having a different chemical composition. For example, there may be produced worktops having a frame comprised of differently coloured portions, or portions made of polymers of a different nature. The worktop 1 will further be provided with appropriate fastening means of any kind commonly known as such in the art, to allow for proper installation on and removal from the top portion of a casing or cabinet of an electric household appliance or a furniture piece of the same worktop 1.

According to the present invention, the first members 4 can indifferently be moulded onto the peripheral border 3 of the panel 2 either prior to or upon moulding the second members 5. The two moulding steps of these first and second members 4 and 5 are in fact directed to, i.e. affect different portions of the peripheral border 3 of the panel 2, so that they can be carried out independently of each other, actually, according to a sequence that best suits the actual complexity of the worktop 1 itself.

A worktop according to the present invention may be used both as a top portion of an outer casing of home appliances and a top surface, or even shelf, for furniture pieces such as for instance kitchen and similar cabinets.

Fully apparent from the above description is therefore the ability of the present invention to effectively reach the afore-cited aims and advantages by providing a method for manufacturing a worktop, in particular a worktop for electric home appliances, which is reliable, versatile and capable of being easily integrated in a more complex manufacturing process of an electric household appliance. By using the inventive method, the number of production scraps or rejects is drastically reduced, regardless of the fact that dimensional tolerances, in particular the tolerance relating to the planarity of said worktop, are certainly tighter than those usually obtainable with prior-art production methods used hitherto.

Readily apparent are also the considerable economic advantages that are obtainable, in terms of savings in material usage and reduction in production costs, through the use of a manufacturing method carried out in accordance with the present invention, i.e. by having different portions of a same worktop moulded by a co-injection process.

The manufacturing method of a worktop according to the present invention can furthermore be appreciated as being advantageously simplified, thanks to the number of steps required to form a finished worktop having been sensibly reduced.

The manufacturing method according to the present invention enables worktops to be produced in a variety of shapes and sizes, which are in this way easily adaptable to a multiplicity of appliance types and designs.

It shall be appreciated that the materials used, as well as the shape and the sizing of the various parts, may each time be selected so as to more appropriately meet the particular requirements or suit the particular application.

The various elements and features of the inventive method and worktop shall obviously not be understood as being limited to the above-described embodiments, since they may be embodied in a number of different manners or be the subject of a number of modifications without departing from the scope of the present invention as defined in the appended claims.

## Claims

1. Manufacturing method of a worktop (1), in particular a worktop for electric household appliances, **characterized by** comprising the following steps:
a) arranging a panel (2) inside a mould;
b) within said mould, forming a plurality of first members (4) along a peripheral border (3) of said panel (2), said first members (4) covering a first portion of said border (3) and being arranged so that between two neighbouring ones of said first members (4) there is interposed a second portion of said border (3);
c) within said mould, forming second members (5) so as to cover said second portion of border (3).

2. Manufacturing method of a worktop (1) according to claim 1, wherein said step c) brings about an interference-fit coupling of said first and second members (4, 5) with each other.

3. Manufacturing method of a worktop (1) according to claim 1 or 2, wherein said first and second members (4, 5) are formed of a polymeric material by injection moulding.

4. Manufacturing method of a worktop (1) according to claim 3, wherein said steps b) and c) are carried out with the use of polymeric materials having different chemical compositions.

5. Manufacturing method of a worktop (1) according to any of the preceding claims, wherein said step b) is carried out prior to said step c), or vice-versa.

6. Worktop (1), in particular for electric household appliances, manufactured by means of a manufacturing method according to any of the claims 1 to 5, wherein said panel (2) has a substantially quadrangular shape and said first members (4) are arranged along the sides of said panels (2) and each one of said second members (5) is arranged in an angular region defined by two adjacent sides of the panel (2) intersecting each other, said first and second members (4, 5) comprising accommodations (6, 11) adapted to receive a portion of the border (3) of said panel (2), and further comprising first and second conjugate surfaces (10, 12, 13, 14) adapted to be mutually coupled by interference.

7. Worktop (1) according to claim 6, wherein said accommodations (6, 11) comprise a pair of spaced apart walls (7, 9; 7', 9') extending parallel to each other from a third common wall (8, 8').

8. Worktop (1) according to claim 6 or 7, wherein said first and second conjugate surfaces (13, 14) form fit-in coupling means.

9. Worktop (1) according to any of the claims 6 to 8, comprising fastening means adapted to enable said worktop (1) to be removably associated to the casing of an electric household appliance or the cabinet of a furniture piece.

10. Household appliance comprising a worktop (1) manufactured using the manufacturing method according to any of the claims 1 to 5 and incorporating the features according to any of the claims 6 to 9.

11. Piece of furniture comprising a worktop (1) manufactured using the manufacturing method according to any of the claims 1 to 5 and incorporating the features according to any of the claims 6 to 9.
